# EUROPEAN PATENT APPLICATION

(11) **EP 4 844 609 A1**
(43) Date of publication of application: **25.11.2026**
(21) Application number: 25177465.9
(22) Date of filing: 19.05.2025
(51) Int. Cl.: G06F 18/2433, G06V 10/764

(54) **UNKNOWN PATTERN IDENTIFICATION SYSTEM AND METHOD**

(71) Applicant: TOYOTA JIDOSHA KABUSHIKI KAISHA, Toyota-shi, Aichi-ken 471-8571 (JP); Rheinische Friedrich-Wilhelms-Universität Bonn, 53115 Bonn (DE)
(72) Inventor: FRANCESCA, Gianpiero, 1140 BRUSSELS (BE); SPURIO, Federico, 53115 BONN (DE); BAHRAMI, Emad, 53115 BONN (DE); GALL, Juergen, 53115 BONN (DE); ZATSARYNNA, Olga, 53115 BONN (DE); ABU FARHA, Yazan, 00972 BIR ZEIT (PS)
(74) Representative: Cabinet Beau de Loménie

(57) **Abstract**

A system (10) for identifying at least one unknown pattern in an input signal (*x*_{1:}*_{T})* comprising a plurality of elements along a succession dimension, the system being configured to:
- classify segments of the input signal into at least one known class corresponding to at least one known pattern that the system has been trained to identify, and a common unknown class (UNK) corresponding to the at least one unknown pattern that the system has not been trained to identify;
- determine a representation similarity among the segments classified into the unknown class;
- based on the determined representation similarity, cluster the elements of said segments that have similar representations into respective classes different from the at least one known class and the unknown class (UNK).

## Description

### BACKGROUND OF THE INVENTION

### 1. Field of the invention

The present disclosure relates to the field of machine learning and pattern segmentation, and more particularly to a system and method for identifying at least one unknown pattern in an input signal comprising a plurality of elements along a succession dimension. The method may find applications in all kinds of industries, including the automotive industry. For instance, the method may be used to understand a vehicle's environment in order to adequately control it, or to monitor and support human activities in places such as a factory.

### 2. Description of Related Art

Machine learning models, among other systems, may be trained to segment or localize patterns in an input signal comprising a plurality of elements along a succession dimension, i.e. to analyze the elements in order to detect which sub-ranges of the input signal include or form some patterns.

For instance, temporal action segmentation identifies action segments and their respective durations within input signals such as videos. This task has numerous practical applications, including assistive technologies, production line monitoring, and human or animal behavior analysis. While there has been major progress in temporal action segmentation, successful approaches still rely on dense annotations of the input signals used during training. Acquiring such annotations is, however, very costly and time-consuming. To mitigate the bottleneck associated with high annotation costs, weaker levels of supervision have been investigated, such as transcript supervision, set supervision and timestamp supervision. While weakly-supervised approaches reduce the overall annotation effort, they do not take into account the ambiguity and complexity associated with some patterns (e.g. actions). However, especially when it comes to annotating complex patterns such as human behaviors, inconsistencies between annotators can occur, leading to the resulting noisy labels contributing to suboptimal model training.

Therefore, there is a need for a new system and method for identifying at least one unknown pattern in an input signal.

The following references disclose various methods relating to the field of machine learning and pattern segmentation.
[REF. 1] Yazan Abu Farha and Juergen Gall. MS-TCN: Multi-stage temporal convolutional network for action segmentation. In CVPR, 2019.
[REF. 2] Ellen Marie Voorhees. The effectiveness and efficiency of agglomerative hierarchic clustering in document retrieval. Cornell University, 1986.
[REF. 3] James Farris. An introduction to numerical classification. Zool., 25, 1976
[REF. 4] P. H. Sneath and R. R. Sokal. Numerical Taxonomy: The Principles and Practice of Numerical Classification. 1st Edition, W. H, 1973.
[REF. 5] R.R. Sokal, C.D. Michener, and University of Kansas. A Statistical Method for Evaluating Systematic Relationships. University of Kansas, 1958
[REF. 6] Joe H. Ward. Hierarchical grouping to optimize an objective function. Journal of the American Statistical Association, 58 (301):236-244, 1963.

### SUMMARY

In this respect, the present disclosure relates to a system for identifying at least one unknown pattern in an input signal comprising a plurality of elements along a succession dimension, the system being configured to:
- classify segments of the input signal into at least one known class corresponding to at least one known pattern that the system has been trained to identify, and a common unknown class corresponding to the at least one unknown pattern that the system has not been trained to identify;
- determine a representation similarity among the segments classified into the unknown class;
- based on the determined representation similarity, cluster the elements of said segments that have similar representations into respective classes different from the at least one known class and the unknown class.

The system may include a memory, and a processor configured to carry out the recited functions. In embodiments, the system may have the hardware structure of a computer. The system may implement at least one machine learning model, for instance a classifier configured to carry out the classifying step.

As used herein, for conciseness and unless the context indicates otherwise, "a", "an", and "the" are intended to refer to "at least one" or "each" and to include plural forms as well. Conversely, generic uses of the plural form may include singular elements.

The input signal comprises an ordered series of elements along one dimension, known as the succession dimension, which can be e.g. time or space. A few non-limiting examples are given below:
- the input signal may be an audio track, i.e. a succession of sounds over time, and the pattern to be segmented may be an instrument and/or a speaker;
- the input signal may be a video, i.e. a succession of images over time, or a plurality of images, and the pattern to be segmented may be an action shown by the video or the plurality of images;
- the input signal may be a three-dimensional (3D) image, seen as a succession of two-dimensional images over a succession dimension which is a third spatial dimension, and the pattern to be segmented may be an object shown in the 3D image.
- the input signal may be a strip of images (e.g. satellite images), i.e. a succession of images over a spatial dimension, and the pattern to be segmented may be a given region (e.g. a region of land);
- the input signal may be an electrical signal (e.g. an electrocardiogram input or an automotive sensor signal), i.e. a succession of electrical values over time, and the pattern to be segmented may be a given motion of the signal.

The input signal may be obtained from a sensor, e.g. a microphone, an imaging device such as a camera, electrodes, etc. The input signal may be pre-processed, e.g. by an encoder, before inputting into the system.

The contents of the elements are such that a plurality of elements forms a pattern, and the classification aims to determine which pattern is included in which (desirably continuous) subset of the elements, also referred to as a segment.

The system, in particular a machine learning model thereof such as a classifier, has been trained to identify at least one pattern class, referred to as the known classes. Segments comprising a pattern corresponding to a known class are normally assigned to that known class. However, the system may not know all possible classes or patterns, and may therefore find segments that do not correspond to any of the known classes. The pattern represented by such segments may not have been seen during training of the system, or may have been seen without being associated with a specific class. Thus, the system is configured to classify segments corresponding to an unknown pattern to a common class, referred to as the unknown class. For conciseness, the segments classified to the known classes and the unknown class may be referred to as the known segments and unknown segments, respectively.

Although the unknown segments are assigned to the same unknown class, they may represent different patterns. In this perspective, the system is further configured to determine a representation similarity among the segments classified into the unknown class, namely a similarity between the respective representations of the segments (or their elements) classified into the unknown class. The representation may include a latent representation, e.g. a feature vector obtained from these segments (or their elements). Similarity may be obtained based on a suitable metric in the feature space, e.g. a distance.

Then, the system clusters elements of the unknown segments based on their similarity. Specifically, elements of the unknown segments that have similar representations (directly or indirectly, e.g. with reference to a specimen, representative, centroid or the like) are assumed to represent the same unknown pattern, and therefore are assigned to a same new class that is different from the at least one known class and the unknown class. The unknown elements may thus be classified into at least two such new classes. This clustering enables to distinguish several unknown subclasses within the common unknown class, and therefore to provide a more detailed and more consistent segmentation of the input signal. This further enables to identify pattern boundaries within the unknown segments.

Therefore, the proposed system efficiently classifies unknown segments within an input signal, which enables to robustly deal with unannotated patterns. This enables to leave complex or ambiguous patterns unannotated in the training data, in order to avoid misleading annotations.

Optionally, the representation similarity is determined based on representations used to classify the segments. The representations may be used by the system (e.g. by a classifier thereof) to classify the segments. This provides a greater consistency between the representations of the known patterns and the representations of the unknown patterns, and avoids calculating new representations.

Optionally, the system is further configured to identify element-wise patterns. That is, the system is configured to identify a pattern, element by element, in the input signal. Therefore, dense classification of the input signal is obtained.

Optionally, the system is further configured to predict pattern boundaries within the input signal and to assign the elements between consecutive pattern boundaries to a same one of the classes. That is, the system predicts boundaries between consecutive patterns within the input signal independently of the classification of the elements into the classes. This separate prediction, and the subsequent assignment to a same one of the classes between consecutive pattern boundaries, provides consistency and robustness in the identification of the patterns within the input signal, as the patterns are generally continuous over some extent in the succession dimension.

Optionally, the same one of the classes is determined based on majority rules applied to the pattern predicted for the elements between consecutive pattern boundaries. As per a majority rule, the class of the segment should be the class of the majority of the elements in that segment. For instance, the system counts the number of elements for each class in the segment, and retains, for the whole segment, the class that has the greatest number of elements. Thus, the system is robust to isolated misclassifications and provides a more consistent output.

Optionally, the system is configured to determine a plurality of pattern boundary proposals and to return, as the predicted pattern boundaries within the input signal, the pattern boundary proposal that has a best score based on comparing the pattern boundaries of the proposal with the pattern boundaries of the segments of the at least one known class. The plurality of pattern boundary proposals may change from one another in terms of number of pattern boundaries and/or location of the pattern boundaries along the succession dimension. The plurality of pattern boundary proposals may be obtained in any suitable way, although a possible method is set out below. To assess their relevance, the pattern boundary proposals are compared to the pattern boundaries of the segments of the at least one known class. In other words, the system leverages the segmentation into the known classes to determine the best pattern boundary proposal, that may include pattern boundaries even within the unknown segments. Thus, pattern boundaries can be accurately identified both within known and unknown pattern segments.

Optionally, the system is configured to compute the score independently of pattern labels. That is, the score is computed based on boundary alignment, irrespective of whether the labels of the segments on either side of the boundary have been correctly determined by the classification step. This makes the proposed system more robust, as it is independent of possible annotation errors.

Optionally, the pattern boundary proposals have different granularity levels. For instance, the pattern boundary proposals include at least two pattern boundary proposals that differ from one another in terms of number of pattern boundaries, and/or at least one segment of one of the pattern boundary proposals corresponds to at least two segments of another one of the pattern boundary proposals, in the succession dimension. The two pattern boundary proposals may have some boundaries in common, but one of these two pattern boundary proposals has more boundaries than the other, in order to convey a finer segmentation of the input signal. Thus, the system has options to select the appropriate level of granularity within the whole input signal, including the unknown segments, based on the detected granularity in the known segments. The unknown segments are thus classified in a more consistent way.

Optionally, the system is configured to obtain the plurality of pattern boundary proposals by successively clustering the elements of the input signal. For instance, a first boundary proposal may be obtained by locating pattern boundaries between every two consecutive elements of the input signal. In this first proposal, there are as many segments as elements. A further boundary proposal may be obtained by clustering at least two segments in the first boundary proposal, i.e. merging two (possibly consecutive) segments and assigning them to the same class. The two segments to merge may be selected based on their similarity. This process may be applied further to obtain the plurality of pattern boundary proposals having different granularities. This enables to build a complete set of proposals from a finest proposal to a coarsest proposal, while accurately capturing intermediate levels of granularity.

Optionally, the input signal is selected from a group comprising a plurality of images, a video, an audio track, an electrical signal, and a combination thereof. As mentioned above, the input signal may be obtained from an appropriate sensor.

Optionally, as mentioned above, the pattern is an action. Optionally, the pattern includes an action performed by an object or a living being. The object may be an animated object such as a robotic device or a vehicle. The living being may be a human being, an animal or a plant.

The present disclosure is further directed to a computer-implemented method for identifying at least one unknown pattern in an input signal comprising a plurality of elements along a succession dimension, the method comprising:
- with a classifier, classifying segments of the input signal into at least one known class corresponding to at least one known pattern that the classifier has been trained to identify, and a common unknown class corresponding to the at least one unknown pattern that the classifier has not been trained to identify;
- determining a representation similarity among the segments classified into the unknown class;
- based on the determined representation similarity, clustering the elements of said segments that have similar representations into respective classes different from the at least one known class and the unknown class.

This method may be carried out by the above-described system. The method may have any feature corresponding to those detailed in relation to the system.

The present disclosure is further directed to a computer-implemented training method for a system comprising a classifier configured to classify segments of an input signal into classes corresponding to patterns, the input signal comprising a plurality of elements along a succession dimension, the training method comprising training the classifier on training data to classify the segments into at least one known class corresponding to at least one known pattern that is identified in the training data, and a common unknown class corresponding to the at least one unknown pattern that is not identified in the training data.

The training method may be used to train the above-described system. The training method may be supervised or weakly-supervised based on the level of identification of the known patterns in the training data. By assigning the at least one unknown pattern to a common unknown class, it is possible to make up for missing or ambiguous annotations as described previously, in order not to negatively affect the training of the system. Thus, the system is trained more accurately by the proposed training method.

Note that the at least one unknown pattern may be annotated in the training data, but in the context of the training method, it may be desired to ignore this annotation and to handle the corresponding segments as unannotated.

Thus, optionally, the training is supervised based on pattern labels of the training data, and the training method comprises replacing the labels of the at least one unknown pattern by a common unknown label before training the classifier.

The present disclosure further relates to a computer program set including instructions for executing the steps of the above-described method or training method when said program set is executed by at least one computer. This program set can use any programming language and take the form of source code, object code or a code intermediate between source code and object code, such as a partially compiled form, or any other desirable form.

The present disclosure further relates to a recording medium readable by at least one computer and having recorded thereon at least one computer program including instructions for executing the steps of the above-described method or training method. The recording medium can be any entity or device capable of storing the program. For example, the medium can include a mass memory device, such as hard drive. In general, mass memory devices suitable for tangibly embodying computer program instructions and data include all forms of non-volatile memory, including by way of example semiconductor memory devices, such as ROM, CD-ROM, EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawing, wherein:

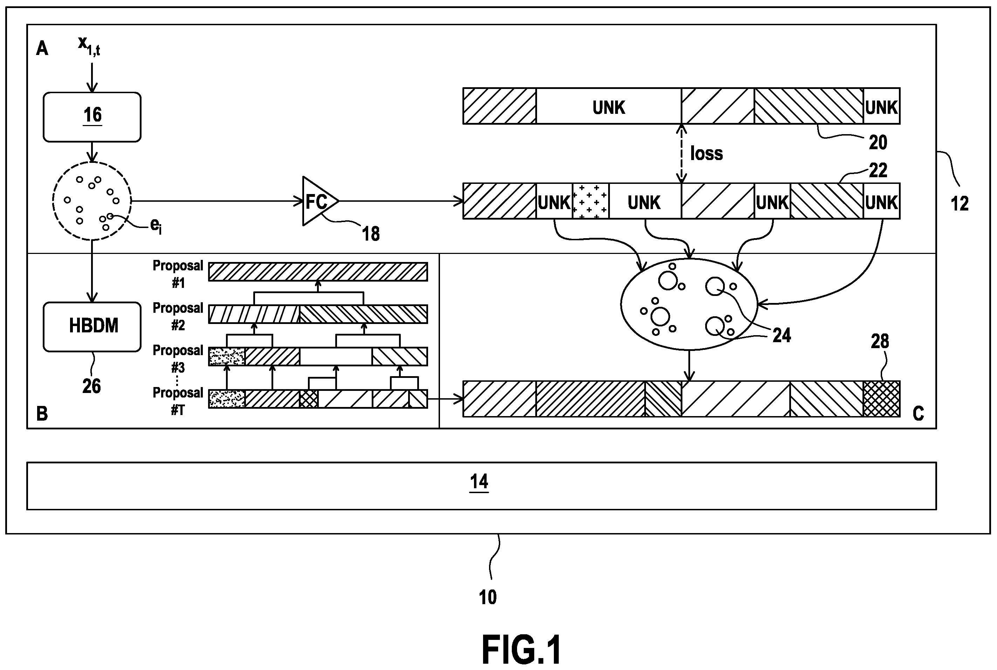

- FIG. 1 is block diagram showing an overview of a system according to an embodiment.

### DETAILED DESCRIPTION OF EMBODIMENTS

Figure 1 illustrates a system 10 according to an embodiment. The system 10 may have the hardware structure of a computer. The system 10 may comprise a processor 12 (shared, dedicated, or group) and a memory 14, and/or other suitable components that provide the described functionalities. In particular, inputs and/or outputs may be provided as desired, e.g. an input to receive an input signal or elements thereof, and an output to output identification of at least one unknown pattern in the input signal.

The memory 14 may form a recording medium readable by at least one computer and having recorded thereon at least one computer program including instructions for executing the steps of the method defined hereinafter. Such a computer program defines functions of the system 10, whereby the system 10 is configured to classify segments of an input signal into at least one known class corresponding to at least one known pattern that the system has been trained to identify, and a common unknown class corresponding to the at least one unknown pattern that the system has not been trained to identify; to determine a representation similarity among the segments classified into the unknown class; and, based on the determined representation similarity, to cluster the elements of said segments that have similar representations into respective classes different from the at least one known class and the unknown class.

These steps and the corresponding method are described in more detail hereinafter. An embodiment of the method focuses on an application to identifying actions in a video, i.e. identifying at least one unknown pattern in an input signal, wherein each pattern corresponds to an action performed in the input signal which is a video or an output of a suitable video preprocessing. However, the principles explained herein can be generalized by the skilled person to other input signals than videos, other patterns than actions and other succession dimensions than time. For example, the input signal may be selected from a group comprising a plurality of images, a video, an audio track, an electrical signal, etc. or a combination thereof.

Temporal action segmentation involves predicting an action label for each frame of a video. Current models assume that all the actions are known and annotated during training. However, in many scenarios not all the actions are known a priori during the annotation, either because these actions are not of interest at the time of annotation or due to changes in annotation protocol.

To address this limitation, the proposed method considers that the actions are divided into two sets: known and unknown. Information about unknown actions is unavailable and all unknown actions are considered background. The challenge lies in predicting the boundaries between consecutive unknown action segments and assigning consistent labels to them based on the context provided by the known action segments in the video.

Given an input signal, e.g. a sequence of video frames (i.e. elements) *x*_{1:}*_{T} =* [*x*₁, *... , x_{7]},* the objective is to infer the class label *c*_{1:}*_{T} =* [*c*₁, *..., c_{T}*] for each frame, where T is the video length. In contrast to the fully-supervised approaches, where all the framewise labels are given during training time, only a subset of action labels is assumed to be known in the proposed method. The set *A* of all actions is partitioned into the subset of known actions, defined as *ϕ_{act}* ⊂ A, and the set of unknown actions, defined as *ϕᵤₙₖ* ⊂ *A,* i.e. *ϕ_{act}* ∩ *ϕᵤₙₖ* = Ø and *ϕ_{act}* ∪ *ϕᵤₙₖ* = *A.*

The system 10 is configured to classify the elements into at least one known class corresponding to at least one known action that the system has been trained to identify, and a common unknown class corresponding to at least one unknown action that the system has not been trained to identify. In other words, the system 10, e.g. a classifier 16 thereof, is trained to predict C = |*ϕ*_{{*act}*}| *+* 1 number of classes, where the additional class is the common class for unknown actions (also referred to as the common unknown class). Let $E = \left[{e}_{1},…,{e}_{i},…,{e}_{T}\right] ∈ {ℝ}^{T \times D}$ be the embeddings (or representation) learned by the system 10 before the classification layer 18, where D is the embedding dimension.

An example of such classifier 16 is MS-TCN, e.g. with the same parameter configuration as in [REF. 1].

This classifier 16 may be trained to classify the segments into at least one known class corresponding to at least one known pattern that is identified in the training data, and a common unknown class corresponding to the at least one unknown pattern that is not identified in the training data. For instance, the training is supervised based on pattern labels of the training data, and the training method comprises replacing the labels of the at least one unknown pattern by a common unknown label before training the classifier 16, thus making the unknown patterns not specifically identified.

Concretely, during the training process, the ground-truth 20 labels are composed by known actions, with labels [*c*₁, ... , c_{|*ϕ*_{{act}}|}] *∈ ϕ*_{{*act*}}, and unknown actions, whose label is replaced by a common label, referred to as UNK hereinafter. As shown in block A of Fig. 1, during training, classification predictions 22 are compared to the ground-truth labels using a suitable loss function, and the system 10 (e.g. the classifier 16) is updated based on that feedback. Update methods can be selected by the skilled person as per their needs and general knowledge.

For example, the classifier 16, used as a temporal action segmentation backbone, may be trained using a combination of Cross Entropy loss 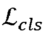 (Eq. (1)) and truncated Mean Squared Error loss 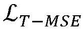 (Eq. (2)), as in [REF. 1]: ${L}_{cls} = \frac{1}{T} {\sum }_{t} - log \left({y}_{t , c}\right)$ (1) ${L}_{T - MSE} = \frac{1}{TC} {\sum }_{t , c} {{Δ}^{˜}}_{t , c}^{2}$ (2) ${{Δ}^{˜}}_{t , c} = \left\{\begin{matrix}{Δ}_{t , c} if {Δ}_{t , c} \leq τ \\ τ otherwise\end{matrix}\right.$ (3) ${Δ}_{t , c} = \left|log {y}_{t , c}-log {y}_{t - 1 , c}\right|$ (4) where *τ* is a hyperparameter. Naturally, other loss functions may be suitably chosen by the skilled person.

The segments that are predicted to belong to the unknown class may correspond to different actions. In order to consistently determine the class of such actions, not only within a single video but also across videos, the proposed method comprises determining a representation similarity among the segments classified into the unknown class, and based on the determined representation similarity, clustering the elements of said segments that have similar representations into respective classes different from the at least one known class and the unknown class.

Representation similarity is a measure of similarity in the representation space. For example, the representation similarity may be determined based on the representations used to classify the segments in order to leverage the learned representations that benefit from the training phase: in the learned representation space, frames corresponding the same actions should exhibit similar representations because they are temporally close to one another.

The representation similarity may be determined based on the training data. Specifically, the subset ${\left\{{E}_{U}^{v}\right\}}_{v = 1}^{V}$ of embeddings of training videos that represent the unknown actions, i.e. those classified as UNK by the classifier 16, for every video *v* ∈ *V,* where *V* is the number of training videos, is defined as follows: ${E}_{U}^{v} = {\left\{\left.{e}_{i}\right|label\left({e}_{i}\right)==UNK\right\}}_{i = 1}^{{T}_{v}} ⊂ {E}^{v}$ (5)

Clustering, such as K-means clustering, may be carried out on ${\left\{{E}_{U}^{v}\right\}}_{v = 1}^{V}$ to obtain the classification of unknown embeddings. The number of clusters K is a hyperparameter. Classification results are optimal when the number of clusters K corresponds to the actual number of unknown actions, but experiments carried out by the inventors show that the proposed method is fairly robust to moderate variation (e.g. less than +/- 50%, preferably less than +/- 30%) of the number of clusters. Greater deviations, especially large reductions, result in performance degradation as the model is forced to overly generalize the clusters in the embedding space.

The centroids 24 resulting from the clustering may be subsequently used to classify unknown embeddings during inference, namely to cluster the unknown embeddings to one of the centroids. For instance, for each unknown action embedding, the closest centroid 24 is identified, e.g. using the Euclidean distance. Given the set of centroids $Z = {\left\{{z}_{i}\right\}}_{i = 1}^{K}$, the closest centroid for each unknown embedding is determined as follows: ${z}_{i}^{closest} = {argmax}_{j} \left(-d\left({e}_{i}, {z}_{j}\right)\right)$ (6) where *d*(*eᵢ, zⱼ*) denotes the Euclidean distance between embedding *eᵢ* and the centroid *zⱼ*. The opposite of the distance *-d*(*eᵢ, zⱼ*) is used to maximize similarity by minimizing the distance, ensuring that the nearest centroid is selected for classification.

Each cluster corresponds to a new class, namely a class that is different from the known classes and from the common unknown class. With a mere clustering within a single video, the proposed method can achieve consistent prediction of the labels for the unknown frames to several unknown classes. In addition, thanks to determining the centroids (or more generally the clusters) based on the training videos, this prediction can be made consistent across videos.

In this way, several unknown classes can be distinguished within actions that were not explicitly learned.

The above approach only takes into account framewise predictions to classify the frames of the video. However, as mentioned above, in order to help the system 10 to properly segment unknown actions, i.e. to find boundaries for every unknown action, the proposed system 10 may be configured to predict pattern boundaries within the input signal, independently of the framewise predictions. This is illustrated by block B in Fig. 1 and may be carried out by a Hierarchical Boundary Detection Module 26 (HBDM).

In particular, the HBDM 26 is configured to predict boundaries of the unknown actions based on the granularity of the known action segments.

In particular, the HBDM 26 may take as input the representation embeddings $E ∈ {ℝ}^{T \times D}$ learned by the classifier 16 for the entire video, i.e. the same representations as those used for classification, and may determine a plurality of pattern boundary proposals on that basis. To provide pattern boundary proposals that have different granularity levels, the proposals may be obtained by clustering the embeddings hierarchically: the HBDM 26 begins with low-level (e.g. frame-level) embeddings and progressively merges clusters to achieve a segmentation of both known and unknown actions. For example, each frame initially forms its own cluster, and over multiple iterations, clusters are merged based on a distance metric. At each step, the two clusters that are farthest apart are merged into a single cluster. This process continues until all data points belong to the same cluster. In other words, the plurality of pattern boundary proposals is obtained by successively clustering the elements of the input signal.

Such processing requires a distance metric to measure the distance between data points or clusters. For example, Euclidean distance may be used. The distance between two clusters is defined as the maximum distance between any two points, one from each cluster. This specific approach is often referred to as the Farthest Point Algorithm [REF. 2]. Formally, the distance between two clusters 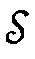 and 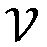 is defined as follows: 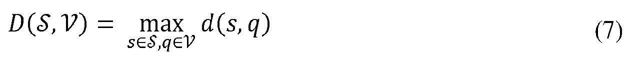 where d(·, ·) is the Euclidean distance and s and q are two points from clusters 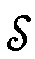 and 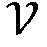 respectively.

This clustering process generates multiple possible segmentations of the input video at each level of the hierarchy, which are referred to as pattern boundary proposals (or merely proposals for conciseness). Figure 1 shows proposals #1, #2, #3 and #T. Note that for other processing to generate the pattern boundary proposals, the number of pattern boundary proposals may not be equal to T. Examples of other processing to select which clusters should be merged at each step of the hierarchical clustering include Unweighted Pair Group Methods with Arithmetic Mean (UPGMA) and using Centroid (UPGMC) [REF. 3], and their Weighted counterparts, WPGMA and WPGMC [REF. 4], a simple Nearest Point algorithm [REF. 5] and Ward [REF. 6]. UPGMA and WPGMA are simple and efficient; however they are sensitive to noise and outliers. UPGMC and WPGMC uses centroids for merging, instead of clusters, and can struggle with uneven cluster densities. The Ward algorithm minimizes the variance within each cluster when merging, leading to compact and meaningful clusters. However, it does not scale well for large datasets, due to the computation complexity. The Farthest Point algorithm, described above, leads to well-separated clusters.

Merging clusters may not require the clusters to be adjacent, as adjacency of frames and similarity is normally already embedded in the representation.

To select the best proposal from the HBDM 26, a score may be computed to rank the proposals and return the best-ranking proposal. For each proposal, the score may be determined based on comparing the pattern boundaries of the proposal with the pattern boundaries of the segments of the at least one known class. Specifically, during training, the score may be computed based on the alignment between the predicted boundaries and the ground-truth boundaries of known actions. During inference, the boundaries of known actions in the classification predictions 22 can be used instead. This score, independent of action labels, may be calculated as the Intersection over Union (IoU) between the predicted and ground-truth boundaries.

Specifically, from the pattern boundary proposals, the HBDM 26 may extract tuples representing the start and end of each action, i.e. *Bₚ* = $\left[\left({s}_{0}^{p}, {f}_{0}^{p}\right),\left({s}_{1}^{p}, {f}_{1}^{p}\right),…,\left({s}_{M}^{p}, {f}_{M}^{p}\right)\right]$, where M is the number of actions inside the segmentation proposals. The same can be done analogously for the ground-truth 20: *B_{gt} =* $\left[\left({s}_{0}^{gt}, {f}_{0}^{gt}\right),\left({s}_{1}^{gt}, {f}_{1}^{gt}\right),…,\left({s}_{N}^{gt}, {f}_{N}^{gt}\right)\right]$, where *N* is the number of known actions plus unknown segments. It is worth to notice that the number of unknown segments is not the same of unknown actions, since adjacent unknown actions have the same label UNK.

The score is then computed as unidimensional (1D) Intersection over Union (IoU), as below: ${IoU}_{1 D} = \frac{1}{MN} {\sum }_{i = 1}^{M} {\sum }_{j = 1}^{N} IoU \left({I}_{i}^{p}, {I}_{j}^{gt}\right)$ (8) where $IoU \left({I}_{i}^{p}, {I}_{j}^{gt}\right) = \frac{max \left(0,min\left({f}_{i}^{p}, {f}_{j}^{gt}\right)-max\left({s}_{i}^{p}, {s}_{j}^{gt}\right)\right)}{max \left({f}_{i}^{p}, {f}_{j}^{gt}\right) - min \left({s}_{i}^{p}, {s}_{j}^{gt}\right)}$ (9)

In an embodiment, the system 10 returns the pattern boundary proposal *B_{best}* with the highest *IoU*₁*_{D}.* This proposal defines the action boundaries for the whole prediction, including unknown actions, given the context and granularity of known actions.

Ultimately, the prediction of the classifier 16 after the above-described unknown action clustering is combined, when available, with the predicted pattern boundaries, namely the best proposal of the Hierarchical Boundary Detection Module 26. This is shown in block C of Fig. 1. That is, based on the predicted pattern boundaries, frames that are located between consecutive pattern boundaries are assigned to a same one of the classes. That class may be determined based on majority rules applied to the pattern predicted for the elements between said consecutive pattern boundaries. In practice, inside every segment of the best proposal, the most frequent predicted label is considered to be the label of the whole segment. The majority rules may be applied on an element-level or on a segment-level.

This results in a full segmentation 28 of the input signal, including a granularity-consistent proposal for patterns that the system has not been trained to identify.

While not reaching the performance of a fully-supervised approach, the proposed system and method provide a significant improvement on segmenting unknown patterns in input signals, while keeping consistent results for known actions, as compared to other weakly supervised approaches. The proposed method effectively captures the structure within unknown actions and leverages the granularity information of known actions to improve segmentation accuracy. These findings highlight the potential of the proposed method to reduce annotation inconsistency and provide meaningful insights for pattern segmentation in many fields, such action recognition for behavior analysis.

In the above description, the HBDM 26 does not require training per se. However, in other embodiments, the HBDM 26 could be trained either individually or together with the classifier 16.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A system (10) for identifying at least one unknown pattern in an input signal (*x*_{1;*T*}) comprising a plurality of elements along a succession dimension, the system being configured to:
- classify segments of the input signal into at least one known class corresponding to at least one known pattern that the system has been trained to identify, and a common unknown class (UNK) corresponding to the at least one unknown pattern that the system has not been trained to identify;
- determine a representation similarity among the segments classified into the unknown class;
- based on the determined representation similarity, cluster the elements of said segments that have similar representations into respective classes different from the at least one known class and the unknown class (UNK).

2. The system of claim 1, wherein the representation similarity is determined based on representations (*eᵢ*) used to classify the segments.

3. The system of claim 1 or 2, further configured to identify element-wise patterns.

4. The system of any of claims 1 to 3, further configured to predict pattern boundaries within the input signal and to assign the elements between consecutive pattern boundaries to a same one of the classes.

5. The system of claim 4, wherein the same one of the classes is determined based on majority rules applied to the pattern predicted for the elements between consecutive pattern boundaries.

6. The system of claim 4 or 5, wherein the system is configured to determine a plurality of pattern boundary proposals (#1, #2, #3, #T) and to return, as the predicted pattern boundaries within the input signal, the pattern boundary proposal that has a best score based on comparing the pattern boundaries of the proposal with the pattern boundaries of the segments of the at least one known class.

7. The system of claim 6, configured to compute the score independently of pattern labels.

8. The system of claim 6 or 7, wherein the pattern boundary proposals (#1, #2, #3, #T) have different granularity levels.

9. The system of any of claims 6 to 8, wherein the system is configured to obtain the plurality of pattern boundary proposals (#1, #2, #3, #T) by successively clustering the elements of the input signal.

10. The system of any of claims 1 to 9, wherein the input signal (*x*_{1:*T*}) is selected from a group comprising a plurality of images, a video, an audio track, an electrical signal, and a combination thereof.

11. A computer-implemented method for identifying at least one unknown pattern in an input signal comprising a plurality of elements along a succession dimension, the method comprising:
- with a classifier (16), classifying segments of the input signal (*x*_{1:*T*}) into at least one known class corresponding to at least one known pattern that the classifier has been trained to identify, and a common unknown class (UNK) corresponding to the at least one unknown pattern that the classifier has not been trained to identify;
- determining a representation similarity among the segments classified into the unknown class;
- based on the determined representation similarity, clustering the elements of said segments that have similar representations into respective classes different from the at least one known class and the unknown class (UNK).

12. A computer-implemented training method for a system (10) comprising a classifier (16) configured to classify segments of an input signal (*x*_{1:*T*}) into classes corresponding to patterns, the input signal comprising a plurality of elements along a succession dimension, the training method comprising training the classifier (16) on training data to classify the segments into at least one known class corresponding to at least one known pattern that is identified in the training data, and a common unknown class (UNK) corresponding to the at least one unknown pattern that is not identified in the training data.

13. The training method of claim 12, wherein the training is supervised based on pattern labels of the training data, and the training method comprises replacing the labels of the at least one unknown pattern by a common unknown label (UNK) before training the classifier (16).

14. A computer program set including instructions for executing the steps of the method of any of claims 11 to 13 when said program set is executed by at least one computer.

15. A recording medium readable by at least one computer and having recorded thereon at least one computer program including instructions for executing the steps of the method of any of claims 11 to 13.

## Amended claims

### Amended claims in accordance with Rule 137(2) EPC.

**1.** A system (10) for identifying at least one unknown pattern in an input signal (*x*_{1:*T*}) comprising a plurality of elements along a succession dimension, the system being configured to:
- classify segments of the input signal into at least one known class corresponding to at least one known pattern that the system has been trained to identify, and a common unknown class (UNK) corresponding to the at least one unknown pattern that the system has not been trained to identify, wherein the input signal is a video or a plurality of images and each pattern corresponds to an action performed in the input signal;
- determine a representation similarity among the segments classified into the unknown class;
- based on the determined representation similarity, cluster the elements of said segments that have similar representations into respective classes different from the at least one known class and the unknown class (UNK).

**2.** The system of claim 1, wherein the representation similarity is determined based on representations (*eᵢ*) used to classify the segments.

**3.** The system of claim 1 or 2, further configured to identify element-wise patterns.

**4.** The system of any of claims 1 to 3, further configured to predict pattern boundaries within the input signal and to assign the elements between consecutive pattern boundaries to a same one of the classes.

**5.** The system of claim 4, wherein the same one of the classes is determined based on majority rules applied to the pattern predicted for the elements between consecutive pattern boundaries.

**6.** The system of claim 4 or 5, wherein the system is configured to determine a plurality of pattern boundary proposals (#1, #2, #3, #T) and to return, as the predicted pattern boundaries within the input signal, the pattern boundary proposal that has a best score based on comparing the pattern boundaries of the proposal with the pattern boundaries of the segments of the at least one known class.

**7.** The system of claim 6, configured to compute the score independently of pattern labels.

**8.** The system of claim 6 or 7, wherein the pattern boundary proposals (#1, #2, #3, #T) have different granularity levels.

**9.** The system of any of claims 6 to 8, wherein the system is configured to obtain the plurality of pattern boundary proposals (#1, #2, #3, #T) by successively clustering the elements of the input signal.

**10.** A computer-implemented method for identifying at least one unknown pattern in an input signal comprising a plurality of elements along a succession dimension, the method comprising:
- with a classifier (16), classifying segments of the input signal (*x*_{1:*T*}) into at least one known class corresponding to at least one known pattern that the classifier has been trained to identify, and a common unknown class (UNK) corresponding to the at least one unknown pattern that the classifier has not been trained to identify, wherein the input signal is a video or a plurality of images and each pattern corresponds to an action performed in the input signal;
- determining a representation similarity among the segments classified into the unknown class;
- based on the determined representation similarity, clustering the elements of said segments that have similar representations into respective classes different from the at least one known class and the unknown class (UNK).

**11.** A computer-implemented training method for the system (10) of any of claims 1 to 9, the system comprising a classifier (16) configured to classify segments of an input signal (*x*_{1:*T*}) into classes corresponding to patterns, the training method comprising training the classifier (16) on training data to classify the segments into the at least one known class and the common unknown class (UNK).

**12.** The training method of claim 11, wherein the training is supervised based on pattern labels of the training data, and the training method comprises replacing the labels of the at least one unknown pattern by a common unknown label (UNK) before training the classifier (16).

**13.** A computer program set including instructions for executing the steps of the method of any of claims 10 to 12 when said program set is executed by at least one computer.

**14.** A recording medium readable by at least one computer and having recorded thereon at least one computer program including instructions for executing the steps of the method of any of claims 10 to 12.

**1.** A system (10) for identifying at least one unknown pattern in an input signal (*x*_{1:*T*}) comprising a plurality of elements along a succession dimension, the system being configured to:
- classify segments of the input signal into at least one known class corresponding to at least one known pattern that the system has been trained to identify, and a common unknown class (UNK) corresponding to the at least one unknown pattern that the system has not been trained to identify, wherein the input signal is a video or a plurality of images and each pattern corresponds to an action performed in the input signal;
- determine a representation similarity among the segments classified into the unknown class;
- based on the determined representation similarity, cluster the elements of said segments that have similar representations into respective classes different from the at least one known class and the unknown class (UNK);
- predict pattern boundaries within the input signal and assign the elements between consecutive pattern boundaries to a same one of the classes.

**2.** The system of claim 1, wherein the representation similarity is determined based on representations (*eᵢ*) used to classify the segments.

**3.** The system of claim 1 or 2, further configured to identify element-wise patterns.

**4.** The system of any of claims 1 to 3,wherein the same one of the classes is determined based on majority rules applied to the pattern predicted for the elements between consecutive pattern boundaries.

**5.** The system of any of claims 1 to 4, wherein the system is configured to determine a plurality of pattern boundary proposals (#1, #2, #3, #T) and to return, as the predicted pattern boundaries within the input signal, the pattern boundary proposal that has a best score based on comparing the pattern boundaries of the proposal with the pattern boundaries of the segments of the at least one known class.

**6.** The system of claim 5, configured to compute the score independently of pattern labels.

**7.** The system of claim 5 or 6, wherein the pattern boundary proposals (#1, #2, #3, #T) have different granularity levels.

**8.** The system of any of claims 5 to 7, wherein the system is configured to obtain the plurality of pattern boundary proposals (#1, #2, #3, #T) by successively clustering the elements of the input signal.

**9.** A computer-implemented method for identifying at least one unknown pattern in an input signal comprising a plurality of elements along a succession dimension, the method comprising:
- with a classifier (16), classifying segments of the input signal (*x*_{1:*T*}) into at least one known class corresponding to at least one known pattern that the classifier has been trained to identify, and a common unknown class (UNK) corresponding to the at least one unknown pattern that the classifier has not been trained to identify, wherein the input signal is a video or a plurality of images and each pattern corresponds to an action performed in the input signal;
- determining a representation similarity among the segments classified into the unknown class;
- based on the determined representation similarity, clustering the elements of said segments that have similar representations into respective classes different from the at least one known class and the unknown class (UNK);
- predicting pattern boundaries within the input signal and assigning the elements between consecutive pattern boundaries to a same one of the classes.

**10.** A computer-implemented training method for the system (10) of any of claims 1 to 8, the system comprising a classifier (16) configured to classify segments of an input signal (*x*_{1:*T*}) into classes corresponding to patterns, the training method comprising training the classifier (16) on training data to classify the segments into the at least one known class and the common unknown class (UNK).

**11.** The training method of claim 10, wherein the training is supervised based on pattern labels of the training data, and the training method comprises replacing the labels of the at least one unknown pattern by a common unknown label (UNK) before training the classifier (16).

**12.** A computer program set including instructions for executing the steps of the method of any of claims 9 to 11 when said program set is executed by at least one computer.

**13.** A recording medium readable by at least one computer and having recorded thereon at least one computer program including instructions for executing the steps of the method of any of claims 9 to 11.

**1.** A system (10) for identifying at least one unknown pattern in an input signal (*x*_{1:*T*}) comprising a plurality of elements along a succession dimension, the system being configured to:
- classify segments of the input signal into at least one known class corresponding to at least one known pattern that the system has been trained to identify, and a common unknown class (UNK) corresponding to the at least one unknown pattern that the system has not been trained to identify, wherein the input signal is a video or a plurality of images and each pattern corresponds to an action performed in the input signal;
- determine a representation similarity among the segments classified into the unknown class;
- based on the determined representation similarity, cluster the elements of said segments that have similar representations into respective classes different from the at least one known class and the unknown class (UNK);
- predict pattern boundaries within the input signal and assign the elements between consecutive pattern boundaries to a same one of the classes, wherein the system is configured to determine a plurality of pattern boundary proposals (#1, #2, #3, #T) and to return, as the predicted pattern boundaries within the input signal, the pattern boundary proposal that has a best score based on comparing the pattern boundaries of the proposal with the pattern boundaries of the segments of the at least one known class.

**2.** The system of claim 1, wherein the representation similarity is determined based on representations (*eᵢ*) used to classify the segments.

**3.** The system of claim 1 or 2, further configured to identify element-wise patterns.

**4.** The system of any of claims 1 to 3,wherein the same one of the classes is determined based on majority rules applied to the pattern predicted for the elements between consecutive pattern boundaries.

**5.** The system of any of claims 1 to 4, , configured to compute the score independently of pattern labels.

**6.** The system of any of claims 1 to 5, wherein the pattern boundary proposals (#1, #2, #3, #T) have different granularity levels.

**7.** The system of any of claims 1 to 6, wherein the system is configured to obtain the plurality of pattern boundary proposals (#1, #2, #3, #T) by successively clustering the elements of the input signal.

**8.** A computer-implemented method for identifying at least one unknown pattern in an input signal comprising a plurality of elements along a succession dimension, the method comprising:
- with a classifier (16), classifying segments of the input signal (*x*_{1:*T*}) into at least one known class corresponding to at least one known pattern that the classifier has been trained to identify, and a common unknown class (UNK) corresponding to the at least one unknown pattern that the classifier has not been trained to identify, wherein the input signal is a video or a plurality of images and each pattern corresponds to an action performed in the input signal;
- determining a representation similarity among the segments classified into the unknown class;
- based on the determined representation similarity, clustering the elements of said segments that have similar representations into respective classes different from the at least one known class and the unknown class (UNK);
- predicting pattern boundaries within the input signal and assigning the elements between consecutive pattern boundaries to a same one of the classes, wherein the method comprises determining a plurality of pattern boundary proposals (#1, #2, #3, #T) and returning, as the predicted pattern boundaries within the input signal, the pattern boundary proposal that has a best score based on comparing the pattern boundaries of the proposal with the pattern boundaries of the segments of the at least one known class.

**9.** A computer-implemented training method for the system (10) of any of claims 1 to 7, the system comprising a classifier (16) configured to classify segments of an input signal (*x*_{1:*T*}) into classes corresponding to patterns, the training method comprising training the classifier (16) on training data to classify the segments into the at least one known class and the common unknown class (UNK).

**10.** The training method of claim 9, wherein the training is supervised based on pattern labels of the training data, and the training method comprises replacing the labels of the at least one unknown pattern by a common unknown label (UNK) before training the classifier (16).

**11.** A computer program set including instructions for executing the steps of the method of any of claims 8 to 10 when said program set is executed by at least one computer.

**12.** A recording medium readable by at least one computer and having recorded thereon at least one computer program including instructions for executing the steps of the method of any of claims 8 to 10.
